# EUROPÄISCHE PATENTSCHRIFT

(11) **EP 1 647 473 B1**
(45) Veröffentlichungstag und Bekanntmachung des Hinweises auf die Patenterteilung: **07.05.2008**
(21) Anmeldenummer: 05021876.7
(22) Anmeldetag: 07.10.2005
(51) Int. Cl.: B62D 61/12, B60G 17/052

(54) **Anlage für Kraftfahrzeuge mit Luftfederung und Liftachse**
System for vehicle with peumatic suspension and liftaxle
Installation pour véhicule avec suspension pneumatique et essieu rétractable

(30) Priorität: 15.10.2004 DE 102004050194
(43) Veröffentlichungstag der Anmeldung: 19.04.2006
(73) Patentinhaber: Haldex Brake Products GmbH, 69123 Heidelberg (DE)
(72) Erfinder: Sulzyc, Georg, 69168 Wiesloch (DE); Becke, Stefan, 68809 Alteussheim (DE)
(74) Vertreter: Rehberg Hüppe + Partner

(56) Entgegenhaltungen:
- EP-A- 0 761 483
- DE-C1- 4 319 943
- US-A1- 2003 151 221

## Beschreibung

Die Erfindung betrifft eine Anlage für Kraftfahrzeuge mit Luftfederung und Liftachse, die zumindest eine auf Tragbälgen abgestützte Tragachse und mindestens eine auf Federbälgen abgestützte und über einen Liftbalg heb- und senkbare Liftachse aufweisen, mit einem Achsliftventil zum Be- und Entlüften des Liftbalgs und der Federbälge, das einen auf einer Feder abgestützten Steuerkolben aufweist, dessen Steuerraum über ein Magnetventil beladungsabhängig be- oder entlüftet ist. Sofern nachfolgend von einer Tragachse und einer Liftachse die Rede ist, versteht es sich, dass ein solches Kraftfahrzeug mindestens eine Tragachse und mindestens eine Liftachse aufweisen muss. Es können aber auch mehrere Tragachsen und mehrere Liftachsen in jeder beliebigen Kombination vorgesehen sein. Die Tragachse ist mit Tragbälgen ausgestattet, wobei in der Regel zwei Tragbälge zu einer Tragachse gehören, auch wenn nur ein Tragbalg erläutert ist. Gleiches gilt für die Liftachse mit in der Regel zwei Federbälgen und einem Liftbalg. Die Federbälge und die Tragbälge können identisch ausgebildet sein und werden nachfolgend nur verbal unterschieden, um leicht erkennbar zum Ausdruck zu bringen, dass der betreffende Balg entweder zu der Tragachse oder zu der Liftachse gehört.

### STAND DER TECHNIK

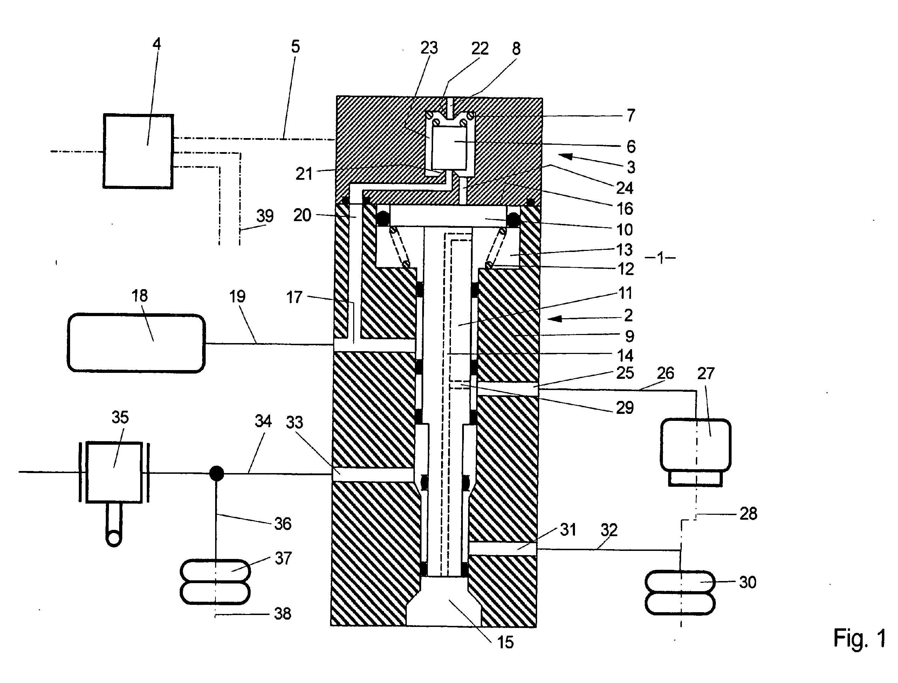

Eine Anlage der eingangs beschriebenen Art ist aus dem Prospekt der Anmelderin mit der Bezeichnung "EINBAUHINWEISE ILAS-E" mit dem Veröffentlichungshinweis 000 352 061 St. 1/TS/09.00 Heidelberg bekannt, wie er ähnlich auch in Fig. 1 wiedergegeben ist. Die Anlage weist eine auf Tragbälgen abgestützte Tragachse und eine auf Federbälgen abgestützte Liftachse auf. Die Liftachse besitzt darüber hinaus einen Liftbalg, mit dem sie heb- und senkbar ausgebildet ist. Zu der Anlage gehört ein Achsliftventil, welches als 5/2-Wegeventil ausgebildet ist. Das Achsliftventil weist in einem Gehäuse einen Steuerkolben auf, der gegen die Kraft einer Feder im Gehäuse verschiebbar ausgebildet ist. Mit dem Steuerkolben ist eine Kolbenstange verbunden, die nach Schieberbauart eine Reihe von Dichtungen trägt, um damit verschiedene Leitungen aneinander anzuschließen bzw. gegeneinander abzuschließen oder zu entlüften. In der durch die Feder herbeigeführten Stellung des Steuerkolbens, bei der also der Steuerraum nicht belüftet ist, ist der Liftbalg der Liftachse entlüftet, was ein Absenken der Liftachse zur Folge hat. Dies entspricht dem Sicherheitsgedanken, dass bei einem Leck in der zu dem Liftbalg führenden Leitung der sichere Zustand, also mit abgesenkter Liftachse erreicht werden soll. In dieser Stellung sind andererseits die Tragbälge der Tragachse mit den Federbälgen der Liftachse verbunden, so dass über ein vorgeschaltetes Niveauregelventil der der Beladung des betreffenden Fahrzeugs entsprechende Druck übereinstimmend in die Tragbälge und die Federbälge eingesteuert wird.

Die Besonderheit dieses Achsliftventils der bekannten Anlage besteht darin, dass es elektrisch über ein Magnetventil ansteuerbar ist. Zu diesem Zweck besitzt das Magnetventil des Achsliftventils eine Verbindung zum Vorratsbehälter, so dass es mit Druckluft aus dem Vorratsbehälter versorgt wird. Das Magnetventil besitzt einen eigenen Entlüftungsanschluss und ist so ausgebildet und angeordnet, dass es in nicht erregtem Zustand durch die Kraft einer Feder den Vorratsanschluss absperrt und den Steuerraum des Steuerkolbens entlüftet. Das Magnetventil reagiert auf ein elektrisches Signal, so dass das Achsliftventil infolge dieses elektrischen Signals über das Magnetventil elektrisch umschaltbar ist. Dies entspricht der allgemeinen Entwicklungsrichtung von Ventilen für Kraftfahrzeuge, bei denen über eine EBS, eine ABS oder eine sonstige ECU elektrische Signale erzeugt, verarbeitet und weitergeleitet werden, um entsprechende Schaltzustände zu erreichen.

Bei solchen Anlagen mit einem elektrisch steuerbaren Achsliftventil entsteht das besondere Problem, dass bei einem leeren oder unterhalb des Umschaltpunktes teilbeladenen Fahrzeug, bei dem bei ordnungsgemäßer Spannungsversorgung die Liftachse angehoben ist, beim Ausschalten der Zündung oder einem sonstigen Defekt in der Spannungsversorgung ein Absenken der Liftachse eintritt, obwohl dies von der Beladung des Fahrzeugs her nicht erforderlich wäre. Auch dies entspricht dem Sicherheitsgedanken. Es kommt also z. B. im Baustellenverkehr, bei Auftreten eines Staus, im Grenzverkehr zur Überbrückung entsprechender Wartezeiten dazu, dass der Fahrer eines Fahrzeugs den Motor abstellt, also die Zündung und damit die elektrische Versorgung unterbricht. Die Folge ist eine Absenkung der Liftachse, obwohl dies an sich dem Beladungszustand nicht entspricht. Weiterhin ergibt sich ein entsprechender Luftverbrauch durch das Auffüllen der Federbälge der Liftachse. Nach Beendigung einer solchen Standzeit des Fahrzeugs wird die Zündung wieder eingeschaltet, worauf die Liftachse wieder angehoben werden muss. Dieses erfordert eine entsprechende Zeit. Das angesprochene Problem macht sich nur bei leerem oder unterhalb des Umschaltpunktes teilbeladenem Fahrzeug bemerkbar, weil bei einem oberhalb des Umschaltpunktes oder voll beladenem Fahrzeug die Liftachse ohnehin abgesenkt ist.

Aus der DE 37 34 617 C1 oder auch der DE 43 14 994 C1 sind Anlagen für Kraftfahrzeuge mit Luftfederung und Liftachse bekannt, die ebenfalls ein Achsliftventil aufweisen. Das Achsliftventil ist dort jedoch pneumatisch angesteuert, so dass das Ein- oder Ausschalten der Zündung keinen Einfluss auf die Stellung des Steuerkolbens des Achsliftventils hat. Das eingangs geschilderte Problem tritt bei solchen Anlagen daher nicht auf.

Die DE 43 19 943 C1 zeigt und beschreibt eine Anlage für Kraftfahrzeuge mit Luftfederung und Liftachse, die zumindest eine auf Tragbälgen abgestützte Tragachse und mindestens eine auf Federbälgen abgestützte und über einen Liftbalg heb- und senkbare Liftachse aufweisen. Innerhalb einer Baueinheit, mit der ein Achsliftventil, ein Regelventil und zwei Umschaltventile zusammengefasst werden, ist auch ein manuell betätigbares Achsliftventil vorgesehen, welches zum Be- und Entlüften des Liftbalgs dient. Die Federbälge werden dagegen von den Umschaltventilen gesteuert. Das manuell betätigbare Achsliftventil weist einen Schaltkolben auf, der über das Regelventil mit Druckluft beaufschlagt werden kann, wenn dies der Beladungszustand erfordert. Damit ist sichergestellt, dass bei Beladung des Fahrzeugs oberhalb des Umschaltpunkts das an sich manuell betätigbare Achsliftventil pneumatisch umschaltbar ist, also die Liftachse abgesenkt werden kann, unabhängig davon, ob die manuelle Betätigung durchgeführt oder vergessen wurde. In einer zweiten Ausführungsform ist in der Baueinheit ein automatisches Achsliftventil vorgesehen, welches von dem Regelventil angesteuert wird und den Liftbalg der Liftachse be- oder entlüftet, je nach Beladungszustand. Das Achsliftventil wird also pneumatisch angesteuert. Sowohl das manuell betätigbare Achsliftventil wie auch das automatische Achsliftventil ist völlig unabhängig von einer Aktivierung oder Inaktivierung der Zündung des Fahrzeugs. Das Ein- oder Ausschalten der Zündung hat damit keinen Einfluss auf die Stellung des Achsliftventils. Das eingangs geschilderte Problem tritt bei solchen Anlagen daher nicht auf.

### AUFGABE DER ERFINDUNG

Der Erfindung liegt die Aufgabe zugrunde, eine Anlage für Fahrzeuge mit Luftfederung und Liftachse bereitzustellen, bei der der Steuerraum des Achsliftventils über ein Magnetventil elektrisch angesteuert beladungsabhängig be- und entlüftbar ist und trotzdem bei leerem oder unterhalb des Umschaltpunktes teilbeladenem Fahrzeug trotz Inaktivierung der Zündung ein Absenken der Liftachse vermieden wird. Bei über den Umschaltpunkt teilbeladenem oder voll beladenem Fahrzeug soll dagegen die automatische Absenkung der Liftachse nicht behindert werden.

### LÖSUNG

Die Aufgabe der Erfindung wird erfindungsgemäß mit den Merkmalen des unabhängigen Patentanspruchs 1 gelöst.

### BESCHREIBUNG DER ERFINDUNG

Die Erfindung geht von dem Gedanken aus, parallel zur Ansteuerung des Steuerkolbens des Achsliftventils über das ein elektrisches Signal verarbeitende Magnetventil eine Ansteuerung auf pneumatischem Wege über ein somit pneumatisch schaltbares Steuerventil vorzusehen. Das pneumatisch schaltbare Steuerventil ist dem Achsliftventil vorgeschaltet. Mit ihm kann der Steuerraum des Steuerkolbens des Achsliftventils oder ein zusätzlich vorgesehener Steuerraum beaufschlagt werden. Das Steuerventil besitzt einerseits einen Versorgungsanschluss für Vorratsluft und andererseits eine Entlüftungsöffnung. Das Steuerventil kann mindestens zwei Stellungen einnehmen, nämlich eine Belüftungsstellung und eine Entlüftungsstellung. Die Belüftungsstellung ist durch eine einwirkende Feder beaufschlagt, während die Entlüftungsstellung entsprechend dem Druck in den Tragbälgen der Tragachse geschaltet wird. Eine vom Steuerventil zum Achsliftventil führende Steuerleitung kann durch das Magnetventil geführt sein, d. h. insbesondere an die Entlüftungsöffnung des Magnetventils angeschlossen sein, so dass letztendlich das Magnetventil durch die Entlüftungsöffnung des Steuerventils entlüftet wird. Es sind aber auch andere konstruktive Ausbildungen möglich.

Damit wird erreicht, dass bei leerem oder teilbeladenem Fahrzeug auch dann die Liftachse angehoben bleibt, wenn die Zündung deaktiviert wird. Zwar fällt dann das Magnetventil ab mit der Folge einer gewünschten Entlüftung des Steuerraums des Steuerkolbens. Diese Entlüftung wird jedoch verhindert, indem über das Steuerventil auf rein pneumatischem Wege Vorratsluft in die Steuerkammer eingesteuert wird, so dass der Steuerkolben des Achsliftventils an einer Umschaltbewegung gehindert wird und die Liftachse auch bei deaktivierter Zündung angehoben bleibt. Wenn ein Fahrzeug voll beladen ist oder oberhalb des Umschaltpunktes beladen ist, ergibt sich ohnehin die Absenkung der Liftachse und die Versorgung der Federbälge mit Druckluft entsprechend dem Beladungszustand. Diese Funktion wird durch das pneumatisch schaltbare Steuerventil nicht behindert.

Das Steuerventil kann insbesondere über die Entlüftungsöffnung des Magnetventils an den ohnehin vorhandenen Steuerraum des Steuerkolbens des Achsliftventils angeschlossen sein. Andererseits ist es aber auch möglich, das Achsliftventil konstruktiv so zu verändern, dass es einen zusätzlichen separaten Steuerraum aufweist, der dann über das Steuerventil be- und entlüftet werden kann. In der ersten Ausführungsform kann die bisherige konstruktive Ausgestaltung des Achsliftventils eingesetzt werden, was den Vorteil erbringt, dass bestehende Anlagen durch Hinzufügung des Steuerventils leicht umrüstbar sind.

Das Steuerventil ist rein pneumatisch schaltbar, d. h. ansteuerseitig mit dem Druck des Tragbalges der Tragachse verbunden. Für die Einnahme der Belüftungsstellung oder der Entlüftungsstellung ist es belanglos, ob die Zündung des Fahrzeugs eingeschaltet oder deaktiviert ist.

In der Versorgungsleitung des Tragbalges der Tragachse ist ein Niveauregelventil vorgesehen, so dass im Tragbalg der Tragachse immer ein proportional zur Beladung des Fahrzeugs abgestimmter Druck herrscht, über den letztendlich auch das Steuerventil pneumatisch geschaltet wird.

In einer besonders einfachen Ausführungsform kann das Steuerventil als 3/2-Wegeventil ausgebildet sein. Solche 3/2-Wegeventile sind käuflich erhältlich, müssen also nicht gesondert konstruiert und hergestellt werden. Dies schließt nicht aus, dass das Steuerventil zum Erreichen weiterer anderer Funktionen noch mehr Anschlüsse und eine vergrößerte Anzahl von Stellungen aufweist. In der Regel weist das Steuerventil einen pneumatisch beaufschlagten Steuerkolben auf, der eine in Schieberbauart ausgebildete Kolbenstange trägt. Es ist aber auch möglich, das Steuerventil in Ventilbauart auszubilden. Beide Versionen sind bekannt und bedürfen daher keiner weiteren Erläuterung.

Wenn das Achsliftventil in seinem pneumatischen Teil einen zusätzlichen Steuerraum aufweisen soll, der über das Steuerventil be- und entlüftbar ist, sind im Achsliftventil zwei gleichsinnig wirkende Steuerkolben hintereinander vorgesehen, von denen der eine über das Magnetventil und der andere über das Steuerventil ansteuerbar ist. Damit sind die beiden Stellungen des Achsliftventils einmal elektrisch über das Magnetventil und eine elektrische vorgeschaltete Steuereinrichtung, insbesondere eine EBS-, ABS- oder sonstige ECU-Anlage, steuerbar, während bei deaktivierter Zündung, bei der auch die elektrische Steuereinrichtung nicht versorgt ist, die beiden Stellungen des Achsliftventils über das Steuerventil erreichbar sind.

In der vom Tragbalg der Tragachse zum Steuerventil führenden Steuerleitung kann zusätzlich ein Magnetventil angeordnet sein, dass bei ordnungsgemäßer Stromversorgung das Steuerventil wirkungsmäßig abschaltet. Bei deaktivierter Stromversorgung nimmt das zusätzliche Magnetventil dagegen seine Durchgangsstellung ein, damit der Druck in den Tragbälgen als Steuerdruck ordnungsgemäß auf das Steuerventil einwirken kann.

Durch das Steuerventil wird wirksam verhindert, dass im leeren oder teilbeladenen Zustand des Fahrzeugs unterhalb des Umschaltpunktes und bei deaktivierter Zündung das Steuerventil ein Absenken der Liftachse verhindert.

Das Steuerventil sollte eine in ihrer Kraft einstellbare Feder zur Festlegung des Umschaltpunktes zwischen teilbeladen und voll beladen aufweisen. Damit kann der Umschaltpunkt des Steuerventils an den Umschaltpunkt der elektrischen Anlage für die Ansteuerung des Magnetventils eingestellt werden.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt Einzelheiten einer Anlage ähnlich der in dem eingangs angegebenen Prospekt, also Stand der Technik.
- **Fig. 2**: zeigt eine erste Ausführungsform der erfindungsgemäßen Anlage.
- **Fig. 3**: zeigt einen Schnitt durch das Steuerventil der Anlage in einer beispielhaften Ausführungsform.
- **Fig. 4**: zeigt eine weitere Ausführungsform der Anlage mit modifiziertem Achsliftventil.

### FIGURENBESCHREIBUNG

**Fig. 1** lässt die wesentlichen Elemente einer Anlage 1 gemäß dem Stand der Technik erkennen. Zentrales Teil der Anlage ist ein Achsliftventil 2, welches ein aufgesetztes Magnetventil 3 besitzt und somit elektrisch angesteuert wird. Die Ansteuerung des Magnetventils 3 erfolgt über eine elektrische oder elektronische Steuereinheit 4 und eine elektrische Steuerleitung 5, über die letztendlich ein Ventilmagnet 6 des Magnetventils 3 erregt bzw. nicht erregt wird. Der Ventilmagnet ist auf einer Feder 7 abgestützt und nimmt in nicht erregtem Zustand die in Fig. 1 dargestellte Schließstellung ein. Das Magnetventil 3 weist einen eigenen Entlüftungsanschluss 8 auf.

Das Achsliftventil 2 besitzt in seinem pneumatischen Teil ein Gehäuse 9, in welchem ein Steuerkolben 10 mit einer Kolbenstange 11 gleitend und dichtend verschiebbar ist. Die Kolbenstange 11 ist in Schieberbauart ausgebildet und besitzt auf ihrem Umfang eine Mehrzahl von Dichtungen, die dazu dienen, entsprechende Leitungsverbindungen herzustellen oder abzusperren. Der Steuerkolben 10 ist auf einer Feder 12 abgestützt. Die Feder 12 befindet sich in einem Federraum 13, der mit Hilfe eines die Kolbenstange 11 durchsetzenden Kanals 14 an einen Entlüftungsauslass 15 angeschlossen ist. Der Steuerkolben 10 teilt im Gehäuse einen Steuerraum 16 ab.

Das Gehäuse 9 des pneumatischen Teils des Achsliftventils 2 besitzt eine Reihe von Anschlüssen. An einem Anschluss 17 ist ein Vorratsbehälter 18 über eine Versorgungsleitung 19 angeschlossen. Damit steht Vorratsluft zwischen den beiden obersten Dichtungen an der Kolbenstange 11 des Achsliftventils an. Ebenfalls steht Vorratsluft über eine Zweigleitung 20 an einem Einlasssitz 21 des Magnetventils 3 an. Der Ventilmagnet 6 bildet mit dem Einlasssitz 21 ein Einlassventil 6, 21. Das Magnetventil 3 weist einen Auslasssitz 22 auf. Der Ventilmagnet 6 bildet mit dem Auslasssitz 22 ein Auslassventil 6, 22. Von einem um den Ventilmagneten 16 gebildeten Ventilraum 23 führt eine Leitung 24 zu dem Steuerraum 16 des Steuerkolbens 10. Das Auslassventil 6, 22 führt über den Entlüftungsanschluss 8 in die Atmosphäre. In der gezeigten Stellung ist also der Steuerraum 16 entlüftet und der Steuerkolben 10 befindet sich infolge der Kraft der Feder 12 in seiner einen Stellung, die als Entlüftungsstellung bezeichnet wird und bei der die Liftachse abgesenkt ist. Zu diesem Zweck ist am Gehäuse 9 des Achsliftventils 2 ein Anschluss 25 vorgesehen, von dem eine Leitung 26 zu einem Liftbalg 27 einer Liftachse 28 führt. Die Leitung 26 und damit der Liftbalg 27 ist in dieser Stellung über einen Stichkanal 29, der mit dem Kanal 14 in Verbindung steht, entlüftet. Die Entlüftung des Liftbalges 27 entspricht dem abgesenkten Zustand der Liftachse 28. Die Liftachse 28 weist ansonsten Federbälge 30 auf, die über einen Anschluss 31 und eine Leitung 32 be- bzw. entlüftet werden. Schließlich besitzt das Gehäuse 9 des Achsliftventils 2 noch einen weiteren Anschluss 33, an den eine Leitung 34 angeschlossen ist, in der ein Niveauregelventil 35 angeordnet ist. Es versteht sich, dass das Niveauregelventil 35 über eine Druckluftversorgung verfügt und andererseits entsprechend dem Beladungszustand einen modifizierten Druck aussteuert, der über eine an die Leitung 34 angeschlossene Leitung 36 in die Tragbälge 37 einer Tragachse 38 gelangt. In der Leitung 34 nach dem Niveauregelventil 35 ist in der Regel ein Drucksensor (nicht dargestellt) angeordnet, der ein dem Druck entsprechendes elektrisches Signal über eine Signalleitung 39 der Steuereinheit 4 zuführt, wobei diese abhängig von dem Signal das Magnetventil 3 schaltet.

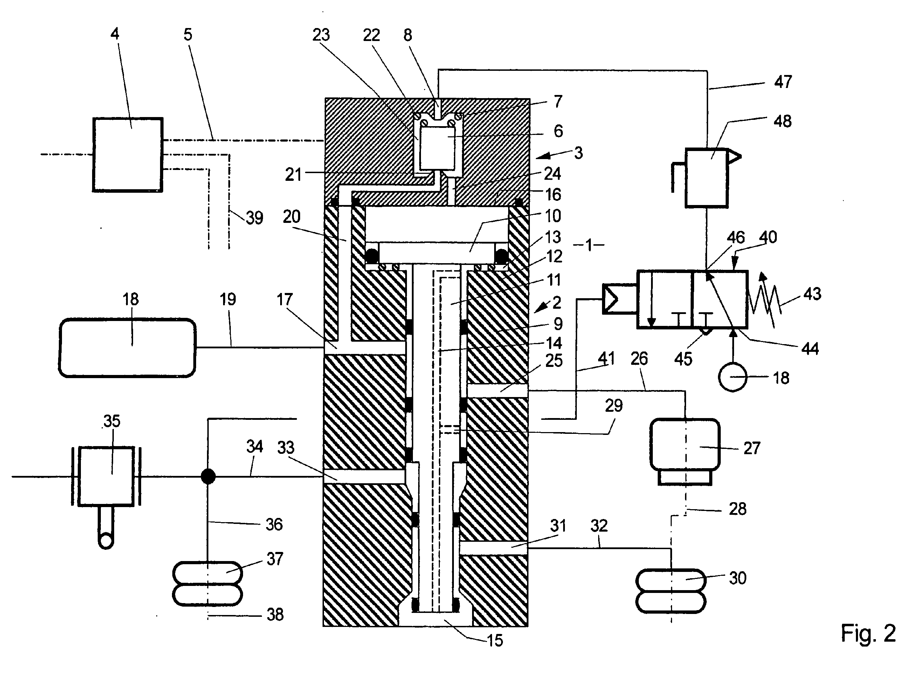

Funktion und Wirkungsweise der bekannten Anlage gemäß Fig. 1 sind damit für einen Fachmann verständlich. Es ist die Entlüftungsstellung des Achsliftventils 2 dargestellt, also eine Stellung, die sich dann ergibt, wenn der Ventilmagnet 6 des Magnetventils 3 nicht erregt ist. Da der Liftbalg 27 entlüftet ist, ist die Liftachse 28 abgesenkt. Bei leerem oder unterhalb des Umschaltpunktes teilbeladenem Fahrzeug steuert die Steuereinheit 4 über die Steuerleitung 5 ein entsprechendes Signal an das Magnetventil 3, so dass der Ventilmagnet 6 erregt wird und in seine andere Stellung umschaltet. Dabei wird das Auslassventil 6, 22 geschlossen und das Einlassventil 6, 21 geöffnet, so dass Druckluft in den Steuerraum 16 gelangt. In der Folge wird der Steuerkolben 16 und die Kolbenstange 11 ihre andere Stellung einnehmen, wie sie prinzipiell in Fig. 2 angedeutet ist. Damit wird der Liftbalg 27 belüftet und die Liftachse 28 angehoben, wobei die Federbälge 30 entlüftet sind.

Wird nun die Zündung deaktiviert, wie es durch Abstellen des Motors bei einer entsprechenden Standzeit sinnvoll ist, dann kehrt der Ventilmagnet 6 in seine in Fig. 1 dargestellte Stellung zurück, d. h. der Steuerraum 16 wird entlüftet mit der Folge einer Absenkung der Liftachse 28, obwohl dies aufgrund des leeren bzw. unterhalb des Umschaltpunktes teilbeladenen Fahrzustandes nicht sinnvoll und auch nicht erforderlich wäre.

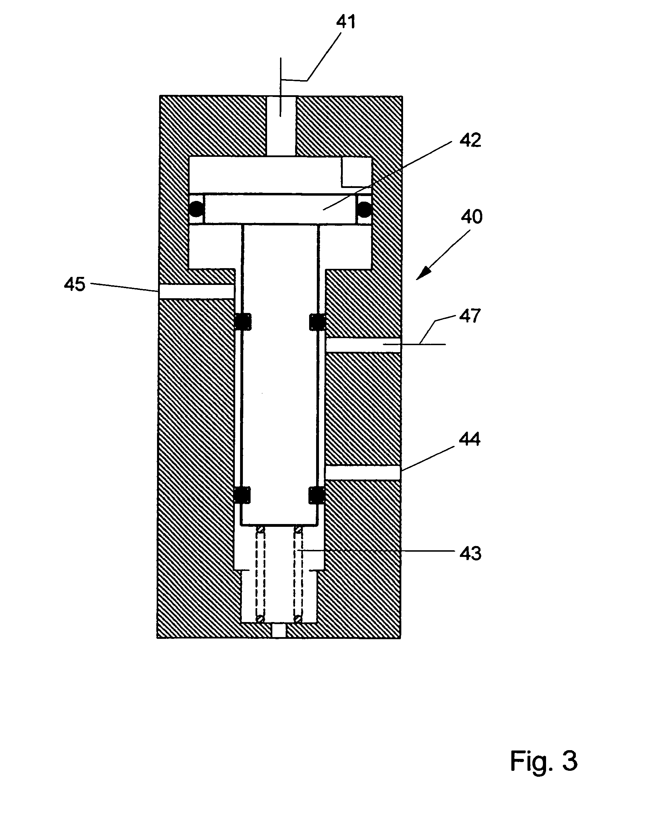

Hier setzt die Erfindung ein. Die Anlage ist anhand der Fig. 2 verdeutlicht. Als weiteres wesentliches Element ist innerhalb der Anlage ein Steuerventil 40 vorgesehen. Das Steuerventil 40 ist über eine Steuerleitung 41 pneumatisch ansteuerbar, die mit der Leitung 34 in Verbindung steht, so dass damit der Druck in den Tragbälgen 37 abgegriffen wird. Das Steuerventil 40 weist einen Steuerkolben 42 (Fig. 3) auf, der auf einer Feder 43 abgestützt ist. Die Kraft der Feder 43 ist vorzugsweise einstellbar. Das Steuerventil 40 ist mindestens als 3/2-Wegeventil ausgebildet, besitzt einen Anschluss 44 für die Versorgung mit Vorratsluft aus dem Vorratsbehälter 18. Das Steuerventil 40 weist einen eigenen Entlüftungsanschluss 45 auf. Von einem Anschluss 46 führt eine Steuerleitung 47 zu dem Entlüftungsanschluss 8 bzw. dem Ventilraum 23 des Magnetventils 3. Es versteht sich, dass damit die Funktion des Entlüftungsanschlusses 8 durch den Entlüftungsanschluss 45 erbracht wird. In der Steuerleitung 47 kann ein Absperrhahn 48 vorgesehen sein. Dieser dient in erster Linie zu Prüfzwecken bei Werkstattaufenthalten, und zwar zur Entlüftung der Steuerleitung 47. In der Regel fehlt ein solcher Absperrhahn 48 in der Steuerleitung 47.

Das Steuerventil 40 weist die zwei dargestellten Stellungen auf. Die Belüftungsstellung wird erreicht, wenn sich die Kraft der Feder 43 bei relativ niedrigem Druck in der Steuerleitung 41 auswirken kann. In dieser Stellung wird Druckluft aus dem Vorratsbehälter 18 über die Steuerleitung 47 in den Steuerraum 16 geleitet. Wenn dagegen in der Steuerleitung 41 ein Druck herrscht, der oberhalb des Umschaltpunktes liegt, wird die Entlüftungsstellung eingenommen, in der die Steuerleitung 47 über den Entlüftungsanschluss 45 an die Atmosphäre angeschlossen ist.

Die neue Anlage gemäß Fig. 2 arbeitet wie folgt:

Geht man davon aus, dass das Fahrzeug leer oder unterhalb des Umschaltpunktes teilbeladen ist und sich das Fahrzeug im Fahrzustand befindet, also mit aktivierter Zündung und ordnungsgemäßer Spannungsversorgung, dann wird über das Niveauregelventil 35 in den Tragbälgen 37 ein entsprechend niedriger Druck eingesteuert. Die Steuereinheit 4 erhält über die Signalleitung 39 ein entsprechendes elektrisches Signal, so dass der Ventilmagnet 6 des Magnetventils 3 über die Steuerleitung 5 erregt wird. Demzufolge wird das Einlassventil 6, 21 geöffnet und das Auslassventil 6, 22 geschlossen und es gelangt Druckluft aus dem Vorratsbehälter 18 in den Steuerraum 16, so dass der Steuerkolben 10 und die Kolbenstange 11 die in Fig. 2 dargestellte Relativlage einnehmen, bei der der Liftbalg 27 belüftet und damit die Liftachse 28 angehoben ist. Gleichzeitig wird der im Tragbalg 37 herrschende Druck auch über die Steuerleitung 41 dem Steuerventil 40 zugeführt. Die dadurch ausgeübte Kraft ist kleiner als die Kraft der Feder 43, so dass das Steuerventil seine Belüftungsstellung gemäß Fig. 2 eingenommen hat.

Erfolgt nun eine Fahrtunterbrechung und eine Deaktivierung der Zündung, beispielsweise durch Abstellen des Motors, dann wird die Spannungsversorgung der Steuereinheit 4 unterbrochen und das Signal über die Steuerleitung 5 fällt weg, so dass der Ventilmagnet 6 in seine nicht erregte Stellung, wie in Fig. 2 dargestellt, übergeht. Damit wird zwar das Einlassventil 6, 21 geschlossen, aber gleichzeitig das Auslassventil 6, 22 geöffnet, so dass nunmehr unter Druck stehende Vorratsluft aus dem Vorratsbehälter 18 in den Steuerraum 16 gelangen kann, so dass der Steuerkolben 10 gehindert ist, seine in Fig. 2 dargestellte Lage zu verlassen. Damit verbleibt der Liftbalg 27 der Liftachse 28 unter Druck, also die Liftachse 28 trotz deaktivierter Zündung angehoben.

Fig. 3 zeigt eine konstruktive Ausführungsmöglichkeit des Steuerventils 40 mit seinen wesentlichen Elementen. Auf die zeichnerische Darstellung wird ausdrücklich hingewiesen. Es handelt sich um ein 3/2-Wegeventil mit Steuerkolben 42 in Schieberbauart und einer in ihrer Kraft einstellbaren Feder 43. Solche Ventile sind für sich Stand der Technik und können zugekauft werden. Die Erfindung ist nicht auf die Ausführungsform des Steuerventils 40 gemäß Fig. 3 beschränkt. Auch andere Ausführungsmöglichkeiten sind denkbar, insbesondere kann das Steuerventil 40 auch nach Ventilbauart verwirklicht werden.

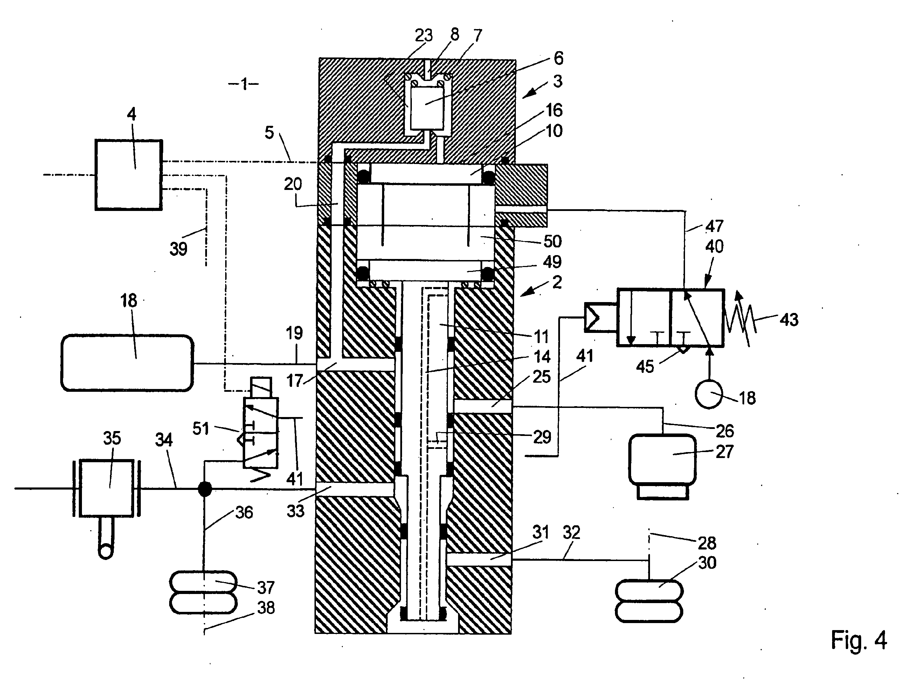

Fig. 4 zeigt eine zweite Ausführungsform der Anlage mit einem modifizierten Achsliftventil 2. Das Achsliftventil 2 weist hier nicht nur den Steuerkolben 10, sondern zusätzlich dazu einen weiteren Steuerkolben 49 mit zugehörigem Steuerraum 50 auf. Die Steuerleitung 47, die von dem Umschaltventil 40 zu dem Achsliftventil 2 führt, ist hier an den zusätzlichen Steuerraum 50 angeschlossen, wobei das Magnetventil 3 mit eigenem beibehaltenen Entlüftungsanschluss 8 verwirklicht ist. Die beiden Steuerkolben 10 und 49 sind gleichsinnig hintereinander angeordnet und können sich aufeinander abstützen, so dass die dargestellte Stellung der Kolbenstange 11 dann erreicht wird, wenn der Steuerraum 16 und/oder der Steuerraum 50 belüftet wird.

Funktion und Wirkungsweise dieser Ausführungsform der Fig. 4 entsprechen im Wesentlichen derjenigen der Fig. 2, so dass hierauf verwiesen werden kann.

In der Steuerleitung 41 kann zusätzlich ein Magnetventil 51 vorgesehen sein, welches zweckmäßig von der Steuereinheit 4 ansteuerbar ist. Das Magnetventil 51 weist die beiden dargestellten Stellungen auf. In nicht erregtem Zustand ist die Steuerleitung 41 unterbrochen, so dass das Steuerventil 40 seine Belüftungsstellung einnimmt. Die Liftachse 28 ist angehoben, und zwar veranlasst über eine Schaltung des Magnetventils 3 entsprechend einem leeren oder teilbeladenen Fahrzeug. Bei deaktivierter Zündung ist die Verbindung in der Steuerleitung 41 hergestellt, so dass das Steuerventil 40 seine Wirkung entsprechend dem jeweiligen Beladungszustand des Fahrzeugs ausüben kann. Die Anordnung des Magnetventils 51 in der Steuerleitung 41 ist jedoch nicht erforderlich, d. h. dieses Magnetventil 51 kann auch fehlen.

### BEZUGSZEICHENLISTE

- 1: Anlage
- 2: Achsliftventil
- 3: Magnetventil
- 4: Steuereinheit
- 5: Steuerleitung
- 6: Ventilmagnet
- 7: Feder
- 8: Entlüftungsanschluss
- 9: Gehäuse
- 10: Steuerkolben

- 11: Kolbenstange
- 12: Feder
- 13: Federraum
- 14: Kanal
- 15: Entlüftungsauslass
- 16: Steuerraum
- 17: Anschluss
- 18: Vorratsbehälter
- 19: Versorgungsleitung
- 20: Zweigleitung

- 21: Einlasssitz
- 22: Auslasssitz
- 23: Ventilraum
- 24: Leitung
- 25: Anschluss
- 26: Leitung
- 27: Liftbalg
- 28: Liftachse
- 29: Stichkanal
- 30: Federbalg

- 31: Anschluss
- 32: Leitung
- 33: Anschluss
- 34: Leitung
- 35: Niveauregelventil
- 36: Leitung
- 37: Tragbalg
- 38: Tragachse
- 39: Signalleitung
- 40: Steuerventil

- 41: Steuerleitung
- 42: Steuerkolben
- 43: Feder
- 44: Anschluss
- 45: Entlüftungsanschluss
- 46: Anschluss

- 47: Steuerleitung
- 48: Absperrhahn
- 49: Steuerkolben
- 50: Steuerraum
- 51: Magnetventil

## Patentansprüche

1. Anlage für Kraftfahrzeuge mit Luftfederung und Liftachse, die zumindest eine auf Tragbälgen (37) abgestützte Tragachse (38) und mindestens eine auf Federbälgen (30) abgestützte und über einen Liftbalg (27) heb- und senkbare Liftachse (28) aufweisen, mit einem Achsliftventil (2) zum Be- und Entlüften des Liftbalgs (27) und der Federbälge (30), das einen auf einer Feder (12) abgestützten Steuerkolben (10) aufweist, dessen Steuerraum (16) über ein Magnetventil (3) beladungsabhängig be- oder entlüftet ist, **dadurch gekennzeichnet, dass** ein pneumatisch schaltbares Steuerventil (40) mit einer Belüftungsstellung und einer Entlüftungsstellung vorgesehen ist, über das der Steuerraum (16) oder ein zusätzlicher Steuerraum (50) des Achsliftventils (2) beladungsabhängig in die Entlüftungsstellung umschaltbar ist und das eine in Richtung auf die Belüftungsstellung einwirkende Feder (43) aufweist.

2. Anlage nach Anspruch 1, **dadurch gekennzeichnet, dass** das Steuerventil (40) über das Magnetventil (3) an den Steuerraum (16) oder den zusätzlichen Steuerraum (50) angeschlossen ist.

3. Anlage nach Anspruch 1 oder 2, **dadurch gekennzeichnet, dass** das Steuerventil (40) ansteuerseitig mit dem Druck des Tragbalges (37) der Tragachse (38) verbunden ist.

4. Anlage nach Anspruch 3, **dadurch gekennzeichnet, dass** in der Versorgungsleitung des Tragbalges (37) der Tragachse (38) ein Niveauregelventil (35) vorgesehen ist.

5. Anlage nach mindestens einem der Ansprüche 1 bis 4, **dadurch gekennzeichnet, dass** das Steuerventil (40) als 3/2-Wegeventil ausgebildet ist.

6. Anlage nach mindestens einem der Ansprüche 1 bis 5, **dadurch gekennzeichnet, dass** das Steuerventil (40) einen pneumatisch beaufschlagbaren Steuerkolben (42) aufweist, der eine in Schieberbauart ausgebildete Kolbenstange trägt.

7. Anlage nach mindestens einem der Ansprüche 1 bis 6, **dadurch gekennzeichnet, dass** das Achsliftventil (2) zwei gleichsinnig wirkende Steuerkolben (10, 49) aufweist, von denen der eine über das Magnetventil (3) und der andere über das Steuerventil (40) ansteuerbar ist.

8. Anlage nach mindestens einem der Ansprüche 1 bis 7, **dadurch gekennzeichnet, dass** in der vom Tragbalg (37) der Tragachse (38) zum Steuerventil (40) führenden Steuerleitung (41) ein Magnetventil (51) angeordnet ist, das bei ordnungsgemäßer Stromversorgung das Steuerventil (40) wirkungsmäßig abschaltet.

9. Anlage nach mindestens einem der Ansprüche 1 bis 8, **dadurch gekennzeichnet, dass** in leerem oder unterhalb des Umschaltpunktes teilbeladenem Zustand des Fahrzeugs und bei deaktivierter Zündung das Steuerventil (40) ein Absenken der Liftachse (28) verhindert.

10. Anlage nach mindestens einem der Ansprüche 1 bis 9, **dadurch gekennzeichnet, dass** das Steuerventil (40) eine in ihrer Kraft einstellbare Feder (43) zur Festlegung des Umschaltpunktes zwischen teilbeladen und voll beladen aufweist.

## Claims

1. A system for vehicles with pneumatic suspension and lift axle, the system including at least one supporting axle (38) supported by supporting bellows (37) and at least one lift axle (28) with bellows (30), the lift axle (28) being lifted and lowered by a lifting bellow (27), the system further including a lifting valve (2) for aerating or venting the lifting bellow (27) and the bellows (30), the lifting valve (2) comprising a control piston (10) being supported on a spring (12) and having a control chamber (16) being designed to be aerated or vented by a solenoid valve (3) in response to the loading of the vehicle, **characterized in that** a pneumatically switchable control valve (40) with an aerating position and a venting position is provided, the control valve (40) switching the control chamber (16) or an additional control chamber (50) of the lifting valve (2) to the venting position in response to the loading of the vehicle and including a spring (43) acting versus the aerating position.

2. The system of claim 1, **characterized in that** the control valve (40) is connected with the control chamber (16) or the additional control chamber (50) via the solenoid valve (3).

3. The system of claim 1 or 2, **characterized in that** the controllable inlet or port of the control valve (40) is connected with the pressure of the supporting bellow (37) of the supporting axle (38).

4. The system of claim 3, **characterized in that** a level control valve (35) is provided within the supply line to the supporting bellow (37) of the supporting axle (38).

5. The system of at least one of the claims 1 to 4, **characterized in that** the control valve (40) is a 3/2-way-valve.

6. The system of at least one of the claims 1 to 5, **characterized in that** the control valve (40) includes a pneumatically operated control piston (42) having a piston rod being designed as a slider.

7. The system of at least one of the claims 1 to 6, **characterized in that** the lifting valve (2) includes two control pistons (10, 49) acting in the same direction, wherein one control piston is controllable by the solenoid valve (3) and the other control piston is controllable by the control valve (40).

8. The system of at least one of the claims 1 to 7, **characterized in that** a solenoid valve (51) is integrated in the control line (41) connecting the supporting bellow (37) of the supporting axle (38) with the control valve (40), the solenoid valve (51) deactivating the control valve (40) during proper electrical power supply.

9. The system of at least one of the claims 1 to 8, **characterized in that** the control valve (40) prevents lowering of the lift axle (28) when the ignition is deactivated and the vehicle is empty or partly loaded below the switching point.

10. The system of at least one of the claims 1 to 9, **characterized in that** the control valve (40) includes a spring (43) the force of which may be adjusted for setting the switching point between the states partly loaded and fully loaded.

## Revendications

1. Installation pour véhicules automobiles avec suspension pneumatique et essieu relevable, lesquels comportent au moins un essieu support (38), en appui sur des soufflets de support (37), et au moins un essieu relevable (28), en appui sur des soufflets pneumatiques (30) et apte à être relevé et abaissé par l'intermédiaire d'un soufflet relevable (27), comportant une vanne de relevage d'essieu (2), qui est destinée à admettre et à évacuer l'air dans le soufflet relevable (27) et les soufflets pneumatiques (30) et qui comporte un piston de commande (10), qui est supporté par un ressort (12) et dont la chambre de commande (16) peut recevoir de l'air ou être purgée en fonction de la charge par l'intermédiaire d'une vanne magnétique (3), **caractérisée en ce qu'**il est prévu une vanne de commande (40) commutable par voie pneumatique avec une position d'admission d'air et une position de purge d'air, par l'intermédiaire de laquelle la chambre de commande (16) ou une chambre de commande supplémentaire (50) de la vanne de relevage d'essieu (2) peuvent être amenées en fonction de la charge dans la position de purge d'air et laquelle comporte un ressort (43) agissant vers la position d'admission d'air.

2. Installation selon la revendication 1, **caractérisée en ce que** la vanne de commande (40) peut être raccordée par l'intermédiaire de la vanne magnétique (3) à la chambre de commande (16) ou à la chambre de commande supplémentaire (50).

3. Installation selon la revendication 1 ou 2, **caractérisée en ce que** la vanne de commande (40) est reliée, du côté activation, à la pression du soufflet de support (37) de l'essieu support (38).

4. Installation selon la revendication 3, **caractérisée en ce qu'**une vanne de réglage de niveau (35) est prévue dans la conduite d'alimentation du soufflet de support (37) de l'essieu support (38).

5. Installation selon au moins l'une des revendications 1 à 4, **caractérisée en ce que** la vanne de commande (40) est réalisée sous la forme d'une vanne à 3/2 voies.

6. Installation selon au moins l'une des revendications 1 à 5, **caractérisée en ce que** la vanne de commande (40) comporte un piston de commande (42) apte à être sollicité par voie pneumatique, lequel porte une tige de piston réalisée en forme de coulisse.

7. Installation selon au moins l'une des revendications 1 à 6, **caractérisée en ce que** la vanne de relevage d'essieu (2) comporte deux pistons de commande (10, 49) agissant dans le même sens, parmi lesquels l'un peut être actionné par l'intermédiaire d'une vanne magnétique (3) et l'autre par l'intermédiaire de la vanne de commande (40).

8. Installation selon au moins l'une des revendications 1 à 7, **caractérisée en ce que** dans la conduite de commande (41), menant depuis le soufflet de support (37) de l'essieu support (38) vers la vanne de commande (40), est disposée une vanne magnétique (51) qui, en présence d'une alimentation électrique réglementaire, désactive la vanne de commande (40).

9. Installation selon au moins l'une des revendications 1 à 8, **caractérisée en ce que** la vanne de commande (40) empêche un abaissement de l'essieu relevable (28) lorsque le véhicule est à vide ou est en charge partielle en dessous du point de commutation et lorsque l'allumage est désactivé.

10. Installation selon au moins l'une des revendications 1 à 9, **caractérisée en ce que** la vanne de commande (40) comporte un ressort (43) à force réglable destiné à définir le point de commutation entre la charge partielle et la pleine charge.
